# FASCICULE DE BREVET EUROPEEN

(11) **EP 1 795 774 B1**
(45) Date de publication et mention de la délivrance du brevet: **24.08.2011**
(21) Numéro de dépôt: 06125474.4
(22) Date de dépôt: 06.12.2006
(51) Int. Cl.: F16D 23/14

(54) **Sous-ensemble d'embrayage notamment pour motocyclette, et embrayage comprenant un tel sous-ensemble**
Kupplungsbaugruppe insbesondere für Motorrad, und Kupplung umfassend eine derartigen Baugruppe
Clutch subassembly specially for motorcycle, and clutch comprising said subassembly

(30) Priorité: 06.12.2005 FR 0553748
(43) Date de publication de la demande: 13.06.2007
(73) Titulaire: Valeo Embrayages, 80009 Amiens (FR)
(72) Inventeur: Lopez-Perez, Carlos c/o Valeo Emrayages, 28005 Madrid (ES)
(74) Mandataire: Jeuland, Mickaël

(56) Documents cités:
- EP-A- 0 048 563
- DE-A1- 19 912 431
- GB-A- 531 046
- US-A- 3 948 371
- US-A- 4 518 070

## Description

La présente invention se rapporte à un sous-ensemble d'embrayage notamment pour motocyclette, et à un embrayage comprenant un tel sous-ensemble.

Comme cela est connu en soi, un embrayage de motocyclette peut comprendre un sous-ensemble comprenant lui-même une bague d'embrayage et une tige d'embrayage.

La tige d'embrayage est montée coulissante selon l'axe de l'embrayage, et la bague d'embrayage est quant à elle montée rotative sur la tige d'embrayage.

La périphérie de la bague d'embrayage coopère avec le diaphragme de l'embrayage, de sorte qu'en faisant coulisser la tige d'embrayage, on peut déplacer le diaphragme de sa position embrayée à sa position débrayée, ou inversement.

Un inconvénient récurrent de la technique antérieure est une usure prématurée d'une part de la bague d'embrayage dans sa zone de coopération avec le diaphragme, et d'autre part de cette bague d'embrayage et de la tige d'embrayage dans leur zone de coopération mutuelle.

Le document EP-A-0.048.563 décrit un sous-ensemble d'embrayage qui comporte une tige dont l'extrémité arrondie est logé dans un creux d'une plaque de poussée correspondante.

Le document GB-A-531.046 décrit un sous-ensemble d'embrayage qui comporte une butée d'embrayage qui est destinée à pousser une bague d'embrayage. La bague d'embrayage ou la butée d'embrayage est équipée d'une liaison rotule.

Cependant aucun de ces deux documents ne propose de solution simple et peu onéreuse pour réaliser la liaison rotule.

La présente invention a notamment pour but de supprimer cet inconvénient.

On atteint ce but de l'invention avec un sous-ensemble d'embrayage notamment pour motocyclette selon la revendication 1. Le sous-ensemble est du type comprenant une bague d'embrayage et une tige d'embrayage adaptée pour déplacer axialement ladite bague, dans lequel la liaison entre ladite bague et ladite tige est du type à rotule.

Grâce à cette liaison du type à rotule, on peut absorber les efforts de nutation transmis par le vilebrequin à la plaque d'embrayage via le diaphragme, et limiter l'usure et la fatigue d'une part de la bague d'embrayage dans sa zone de coopération avec le diaphragme, et d'autre part de cette bague d'embrayage et de la tige
d'embrayage dans leur zone de coopération mutuelle, et ce malgré des vitesses de rotation très élevées du vilebrequin inhérentes aux moteurs de motocyclette.

Suivant une autre caractéristique du sous-ensemble
d'embrayage selon l'invention, ladite liaison est définie par une partie sensiblement hémisphérique de ladite bague d'embrayage, et par un collier sensiblement hémisphérique complémentaire solidaire de ladite tige d'embrayage.

Cette caractéristique permet de réaliser de manière très simple la liaison du type à rotule selon l'invention, en modifiant très peu les pièces déjà existantes.

Suivant une autre caractéristique optionnelle du sous-ensemble d'embrayage selon l'invention, ledit collier est monté par serrage sur ladite tige d'embrayage.

Ce mode de montage est simple et garant d'une liaison solide entre le collier sensiblement sphérique et la tige d'embrayage.

Suivant une autre caractéristique optionnelle du sous-ensemble d'embrayage selon l'invention, ladite tige d'embrayage comprend une partie sensiblement conique, et ledit collier est monté sur cette partie sensiblement conique.

Cette caractéristique permet de positionner de manière très précise et de bloquer de manière très sûre le collier sensiblement hémisphérique sur la tige d'embrayage.

Suivant une autre caractéristique optionnelle du sous-ensemble d'embrayage selon l'invention, une rondelle est disposée à la périphérie de ladite partie sensiblement hémisphérique, cette rondelle dépassant légèrement vers l'intérieur du bord de cette partie, de manière à empêcher ledit collier de sortir de cette partie.

Cette rondelle permet d'éviter que la bague d'embrayage puisse se désolidariser axialement de la tige d'embrayage.

Suivant une autre caractéristique optionnelle du sous-ensemble d'embrayage selon l'invention, un léger jeu axial entre ladite rondelle et ledit collier est prévu.

Ce léger jeu axial permet d'absorber les mouvements de pompage transmis à la bague d'embrayage par le vilebrequin via le diaphragme.

Suivant une autre caractéristique optionnelle du sous-ensemble d'embrayage selon l'invention, ledit collier est formé en métal fritté.

Ce mode de réalisation permet de fabriquer un collier présentant une excellente précision dimensionnelle, ainsi que d'en faciliter la lubrification.

Suivant une autre caractéristique optionnelle du sous-ensemble d'embrayage selon l'invention, ladite liaison du type à rotule est lubrifiée.

Cette caractéristique permet d'améliorer encore la durabilité de cette liaison.

D'autres caractéristiques et avantages de la présente invention apparaîtront à la lecture de la description qui va suivre et à l'examen des figures annexées, dans lesquelles :
- la figure 1 représente une vue en coupe axiale d'un embrayage de motocyclette selon l'invention,
- la figure 2 est une vue en perspective et en coupe axiale partielle d'un sous-ensemble de l'embrayage de la figure 1, comprenant une bague et une tige d'embrayage,
- la figure 3 est une vue partielle en coupe axiale de ce sous-ensemble,
   et
- la figure 4 est une vue analogue à celle de la figure 3 dudit sous-ensemble, dans un mode de réalisation de l'art antérieur.

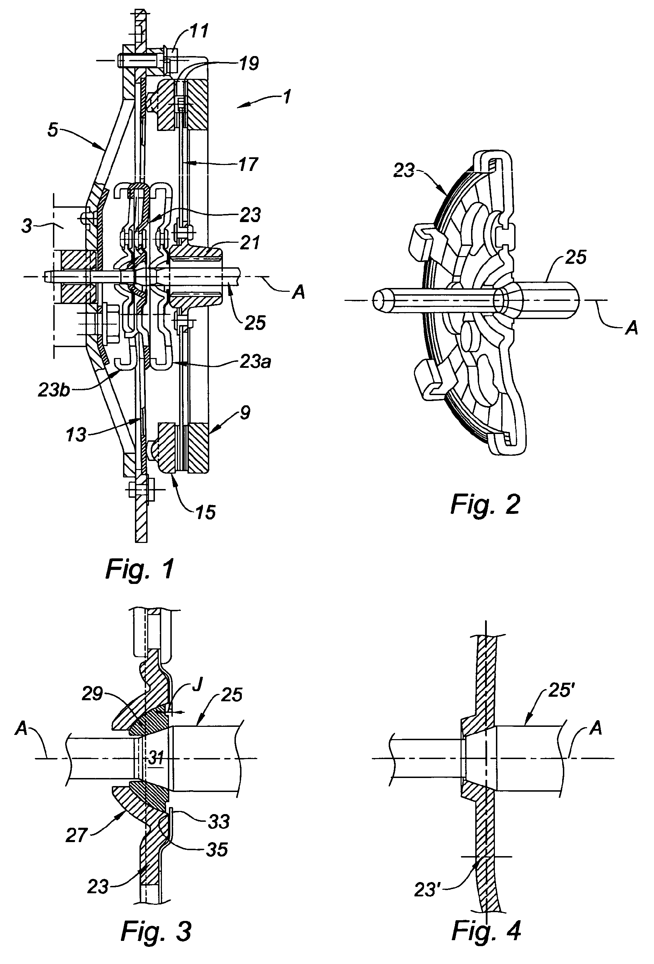

On se reporte à présent à la figure 1, sur laquelle on a représenté un embrayage 1 de motocyclette selon l'invention.

Cet embrayage est destiné à être positionné entre d'une part un vilebrequin 3 actionné par un moteur à explosion (non représenté) et d'autre part une boîte de vitesses (non représentée).

L'embrayage 1 comprend une plaque d'embrayage 5 fixée sur le vilebrequin 3 par exemple par des vis 7.

Un plateau d'appui fixe 9 est fixé sur la plaque d'embrayage 5 par des moyens appropriés telles que des vis 11.

Entre la plaque d'embrayage 5 et le plateau d'appui fixe 9 se trouve un diaphragme 13 et un plateau d'appui mobile 15 monté coulissant selon la direction de l'axe A de l'embrayage 1.

Un disque de friction 17 comportant à sa périphérie des garnitures 19 est interposé entre le plateau d'appui mobile 15 et le plateau d'appui fixe 9.

Comme cela est connu en soi, le moyeu 21 du disque de friction 17 est destiné à coopérer avec un arbre primaire de boîte de vitesses (non représenté).

Une bague d'embrayage 23 est montée rotative sur une tige axialement coulissante 25.

La périphérie de la bague d'embrayage 23 coopère avec le diaphragme 13, de manière à pouvoir solliciter celui-ci axialement en direction du vilebrequin 3, tout en demeurant bloquée en rotation par rapport à ce diaphragme.

Le mode de fonctionnement de l'embrayage qui vient d'être décrit résulte directement de la description qui précède.

Lorsqu'aucune sollicitation axiale n'est imposée à la tige coulissante 25, la bague d'embrayage 23 se trouve dans la position 23a visible sur la figure 1.

Dans cette position, la bague d'embrayage 23 n'exerce aucun effort axial sur le diaphragme 13, lequel peut alors exercer, en raison de son élasticité propre, un effort de poussée axiale maximal sur le plateau mobile 15, ce qui a pour effet de pincer la friction 17 entre ce plateau mobile et le plateau fixe 9.

Dans cette configuration, le couple du vilebrequin 3 est donc transmis à la friction 17 et au moyeu 21 : l'embrayage est en position embrayée.

Lorsqu'on exerce un effort de poussée axiale sur la tige 25 en direction du vilebrequin 3, la bague d'embrayage 23 atteint la position 23b, ce qui a pour effet d'écarter le diaphragme 13 du plateau mobile 15, et ainsi de libérer l'effort de pincement exercé sur la friction 17.

Dans cette configuration, le couple du vilebrequin 3 n'est plus transmis à la friction 17 : l'embrayage se trouve en position débrayée.

Que cet embrayage se trouve en position embrayée ou débrayée, la plaque d'embrayage 5, et donc la bague d'embrayage 23, tournent en permanence avec le vilebrequin 3, à la vitesse du moteur.

Cette vitesse peut être très élevée, et atteindre typiquement 15 000 tours/min, ce qui est susceptible de provoquer une usure rapide de la bague d'embrayage 23 et de la tige d'embrayage 25 dans leur zone de coopération mutuelle.

Il faut ajouter à cela que cet embrayage de motocyclette ne comprend aucun moyen élastique (ou « flexplate ») d'absorption des mouvements de pompage et de nutation transmis par le vilebrequin : ces mouvements sont donc transmis intégralement à la bague d'embrayage 23 via le diaphragme 13, d'où il peut résulter une usure rapide d'une part de la bague d'embrayage 23 dans sa zone de coopération avec le diaphragme 13, et d'autre part de cette bague et de la tige 25 dans leur zone de coopération mutuelle.

Pour résoudre ce problème, on prévoit une liaison du type à rotule entre la bague d'embrayage 23 et la tige d'embrayage 25.

Plus précisément, comme cela est visible sur la figure 3, dans sa zone de liaison avec la tige d'embrayage 25, la bague d'embrayage 23 comprend une partie 27 de forme sensiblement hémisphérique, complémentaire d'un collier 29 lui-même sensiblement hémisphérique, emmanché par exemple par serrage sur une partie sensiblement conique 31 de la tige d'embrayage 25.

On obtient ainsi un contact sphère contre sphère qui permet de réaliser la liaison du type à rotule.

Cette liaison du type à rotule permet de limiter l'usure due à la rotation à très grande vitesse de la bague d'embrayage 23 par rapport à la tige d'embrayage 25.

Ceci est d'autant plus vrai si l'on choisit un collier 29 formé dans un matériau aisément lubrifiable.

A cet égard, on notera qu'il est particulièrement approprié de fabriquer le collier 29 en métal fritté, un tel métal présentant en effet des caractéristiques de porosité qui en facilitent la lubrification.

Le frittage permet en outre (tout comme l'usinage d'ailleurs) d'obtenir des pièces présentant une excellente précision dimensionnelle.

La liaison du type à rotule permet en outre d'absorber très efficacement les efforts dus aux mouvements de nutation du vilebrequin, ce qui permet de ralentir l'usure et la fatigue d'une part de la bague d'embrayage 23 dans sa zone de coopération avec le diaphragme 13, et d'autre part de cette bague et de la tige 25 dans leur zone de coopération mutuelle.

On notera que l'on prévoit avantageusement une rondelle 33 à la périphérie de la partie sensiblement hémisphérique 27, cette rondelle dépassant légèrement vers l'intérieur du bord 35 de cette partie 27, de manière à empêcher le collier 29 de sortir de la partie 27, et donc la bague d'embrayage 23 de s'échapper de sa zone de liaison avec la tige d'embrayage 25.

On notera toutefois que l'on prévoit un léger jeu axial J entre la rondelle 33 et le collier 29 : ce léger jeu permet à la bague d'embrayage 23 de coulisser légèrement par rapport à la tige d'embrayage 25, et ainsi d'absorber les mouvements de pompage transmis à la bague d'embrayage 23 par le vilebrequin 3 via le diaphragme 13.

On comprend à la lumière des explications qui précèdent les raisons pour lesquelles la liaison du type à rotule selon l'invention permet de s'affranchir des inconvénient d'usure prématurée constatée dans les embrayages de la technique antérieure (voir figure 4), dans lesquels la liaison entre la bague d'embrayage 23' et la tige d'embrayage 25' sont du type cône contre cône.

Alors qu'une telle liaison implique des frottements élevés entre la bague 23' et la tige 25', ainsi qu'un unique degré de liberté dans un seul sens de l'axe de l'embrayage, la liaison du type à rotule selon l'invention autorise des degrés de liberté supplémentaires qui permettent d'absorber les mouvements parasites du vilebrequin.

Bien entendu, la présente invention n'est nullement limitée au mode de réalisation décrit et représenté, fourni à titre d'exemple.

## Revendications

1. Sous-ensemble d'embrayage notamment pour motocyclette, du type comprenant une bague d'embrayage (23) et une tige d'embrayage (25) adaptée pour déplacer axialement ladite bague, dans lequel la liaison entre ladite bague et ladite tige est du type à rotule, ladite liaison étant définie par une partie (27) sensiblement hémisphérique de ladite bague d'embrayage (23), et par un collier (29) sensiblement hémisphérique complémentaire solidaire et monté par serrage sur une partie sensiblement conique (31) de ladite tige d'embrayage (25).

2. Sous-ensemble selon la revendication 1, dans lequel une rondelle (33) est disposée à la périphérie de ladite partie sensiblement hémisphérique (27), cette rondelle (33) dépassant légèrement vers l'intérieur du bord (35) de cette partie (27), de manière à empêcher ledit collier (29) de sortir de cette partie (27).

3. Sous-ensemble selon la revendication 2, dans lequel ledit un léger jeu axial (J) entre ladite rondelle (33) et ledit collier (29) est prévu.

4. Sous-ensemble selon l'une quelconque des revendications 1 à 3, dans lequel ledit collier (29) est formé en métal fritté.

5. Sous-ensemble selon l'une quelconque des revendications précédentes, dans lequel ladite liaison du type à rotule est lubrifiée.

6. Embrayage notamment pour motocyclette, comprenant un sous-ensemble conforme à l'une quelconque des revendications précédentes.

## Claims

1. Clutch sub-assembly, in particular for a motorcycle, of the type comprising a clutch ring (23) and a clutch rod (25) which is designed to displaced the said ring axially, wherein the connection between the said ring and the said rod is of the swivel joint type, the said connection being defined by a substantially hemispherical part (27) of the said clutch ring (23), and by a complementary substantially hemispherical collar (29), which is integral with, and is fitted by being clamped onto, a substantially conical part (31) of the said clutch rod (25).

2. Sub-assembly according to claim 1, wherein a washer (33) is disposed on the periphery of the said substantially hemispherical part (27), this washer (33) projecting slightly towards the interior of the edge (35) of this part (27), such as to prevent the said collar (29) from coming out of this part (27).

3. Sub-assembly according to claim 2, wherein slight axial play (J) is provided between the said washer (33) and the said collar (29).

4. Sub-assembly according to any one of claims 1 to 3, wherein the said collar (29) is made of sintered metal.

5. Sub-assembly according to any one of the preceding claims, wherein the said connection of the swivel joint type is lubricated.

6. Clutch, in particular for a motorcycle, comprising a sub-assembly according to any one of the preceding claims.

## Patentansprüche

1. Untergruppe einer Kupplung, insbesondere für ein Motorrad, umfassend einen Kupplungsring (23) und einen zur axialen Verschiebung dieses Rings geeigneten Kupplungsstößel (25), wobei die Verbindung zwischen dem Ring und dem Stößel in der Art eines Kugelkopfs ausgeführt ist, wobei die besagte Verbindung durch einen etwa halbkugelförmigen Teil (27) des besagten Kupplungsrings (23) und durch eine etwa halbkugelförmige komplementäre Schelle (29) definiert ist, welche fest und durch Einspannung auf einem etwa konischen Teil (31) des besagten Kupplungsstößels (25) montiert ist.

2. Untergruppe nach Anspruch 1, bei der eine Scheibe (33) an den Umfang des besagten etwa halbkugelförmigen Teils (27) angeordnet ist, wobei diese Scheibe (33) den Rand (35) dieses Teils (27) etwas nach innen überragt, um zu verhindern, dass die Schelle (29) aus diesem Teil (27) heraustritt.

3. Untergruppe nach Anspruch 2, bei der ein geringes axiales Spiel (J) zwischen der besagten Scheibe (33) und der besagten Schelle (29) vorgesehen ist.

4. Untergruppe nach einem der Ansprüche 1 bis 3, bei der die besagte Schelle (29) aus Sintermetall geformt ist.

5. Untergruppe nach einem der vorangehenden Ansprüche, bei der die besagte kugelkopfartige Verbindung geschmiert ist.

6. Kupplung, insbesondere für ein Motorrad, umfassend eine Untergruppe nach einem der vorangehenden Ansprüche.
